# FASCICULE DE BREVET EUROPEEN

(11) **EP 1 963 598 B1**
(45) Date de publication et mention de la délivrance du brevet: **15.05.2013**
(21) Numéro de dépôt: 06841964.7
(22) Date de dépôt: 15.12.2006
(51) Int. Cl.: E05B 1/00, E05B 65/19, F16B 21/00

(54) **Système de fermeture d'un véhicule automobile**
Verschlusssystem für ein Kraftfahrzeug
Closure system for a motor vehicle

(30) Priorité: 15.12.2005 FR 0512744
(43) Date de publication de la demande: 03.09.2008
(73) Titulaire: Valeo Sécurité Habitacle, 94046 Créteil Cedex (FR)
(72) Inventeur: PLANTELINE, Bernard, F-94042 Créteil Cedex (FR)
(74) Mandataire: Croonenbroek, Thomas Jakob
(86) Numéro de dépôt international: PCT/FR2006/002761
(87) Numéro de publication internationale: WO 2007/071836

(56) Documents cités:
- FR-A- 1 557 849
- FR-A1- 2 781 259
- GB-A- 821 125
- US-A- 1 937 965

## Description

La présente invention a pour objet un système de fermeture d'un véhicule automobile. Elle s'applique notamment mais non exclusivement aux systèmes de fermeture utilisés dans les verrous de coffre de voiture.

On sait qu'il existe déjà des dispositifs servant de butée fin de course d'un poussoir du type susdit afin d'empêcher qu'il ne se désolidarise du mécanisme de fermeture auquel il est associé. Ainsi, on a déjà proposé un mécanisme de maintien d'un poussoir consistant en un joint souple, de préférence en caoutchouc ou en élastomère, engagé dans une gorge annulaire s'étendant sur la surface externe de la partie inférieure dudit poussoir. Cependant, ce mécanisme de maintien ne permet pas de satisfaire aux standards d'inviolabilité tels que fixés par les essais Thatcham en effet, il présente plus particulièrement l'inconvénient d'être déformable et de s'user prématurément.

Afin de résoudre cet inconvénient, on a recours à une bague de retenue rigide servant de butée fin de course à un poussoir du type susdit, cette bague de retenue pouvant être notamment solidarisée au poussoir à l'aide d'un mécanisme à baïonnette.

Néanmoins, ce mécanisme ne permet pas de garantir que la bague de retenue ne puisse se déplacer en rotation, notamment dans le sens inverse de celui du blocage du mécanisme à baïonnette, et donc ne se désolidarise. Le document FR 1 557 849 décrit un système de fermeture d'un véhicule automobile.

L'invention a donc plus particulièrement pour but de supprimer cet inconvénient. A cet effet, elle propose un système de fermeture d'un véhicule automobile comprenant:
● un poussoir muni d'une tête et d'un corps, le corps étant monté coulissant dans un logement du système de fermeture,
● une bague de retenue solidarisée audit poussoir.

Le système de fermeture est caractérisé en ce qu'il comprend un élément de verrouillage au moins partiellement annulaire, apte à s'engager sur le corps du poussoir, cet élément de verrouillage comportant :
● une première conformation agissant par coopération de forme avec une conformation correspondante dudit corps pour verrouiller en rotation l'élément de verrouillage sur ledit corps;
● une deuxième conformation agissant par coopération de forme avec une conformation correspondante de ladite bague pour la verrouiller en rotation par rapport audit corps,
et en ce que
● le corps du poussoir comprend à l'une de ses extrémités une portion sensiblement cylindrique et dont la surface cylindrique extérieure est munie :
   o d'au moins une cannelure axiale débouchant à l'une des extrémités du corps ;
   o d'une gorge annulaire coaxiale recoupant ladite cannelure à une distance prédéterminée de ladite extrémité ;
● la bague de retenue présente un diamètre intérieur au moins égal au diamètre extérieur dudit corps, cette bague de retenue comprenant au moins une protubérance qui s'étend radialement en saillie vers l'intérieur, à partir de sa surface intérieure, cette protubérance étant dimensionnée de manière à pouvoir s'engager dans ladite cannelure et dans ladite gorge ;
● l'élément de verrouillage consiste en un capot comprenant une jupe cylindrique de diamètre intérieur sensiblement égal au diamètre extérieur de ladite bague, ce capot comportant :
   o une collerette radiale qui s'étend vers l'intérieur, depuis l'une des extrémités de la jupe, cette collerette radiale présentant un diamètre intérieur sensiblement égal au diamètre extérieur dudit corps
   o au moins une protubérance radiale qui s'étend depuis la surface intérieure de ladite collerette, cette protubérance radiale étant conformée de manière à pouvoir s'engager dans ladite cannelure.

Selon une variante d'execution de l'invention, le capot comporte au moins une lèvre circulaire s'étendant radialement depuis la surface intérieure de ladite jupe, vers l'intérieur de celle-ci, cette lèvre étant destinée à assurer une fixation temporaire, i.e. démontable, par clipsage du capot sur ladite bague.

De cette façon, lors de l'engagement de la bague sur le corps du poussoir, la protubérance radiale de la bague de retenue est engagée dans la cannelure dudit corps jusqu'à atteindre ladite gorge. La bague de retenue est ensuite entraînée en rotation de manière à ce que sa protubérance s'engage dans la gorge annulaire et ne soit plus dans l'axe de la cannelure, on obtient ainsi un blocage axial de la bague. Afin d'éviter que la bague ne puisse tourner et revenir dans l'axe de la cannelure (position dans laquelle elle pourrait se désolidariser du corps), le capot est assemblé sur le corps, sa protubérance radiale étant engagée dans ladite cannelure. Le capot est ensuite positionné de telle façon que l'intégralité de sa jupe recouvre la bague de retenue. Le clipsage de la lèvre du capot, qui constitue ladite deuxième conformation, sur la partie inférieure de la bague lors du positionnement du capot sur la bague, permet de solidariser le capot à la bague. De plus, la protubérance radiale du capot, qui constitue ladite première conformation, est bloquée en rotation par les parois latérales de ladite cannelure, ce qui permet à l'ensemble constitué par ce capot et par la bague de retenue d'être verrouillé en rotation.

Selon une variante d'exécution de l'invention, la protubérance du capot est d'abord engagée dans la cannelure du corps en faisant en sorte que ladite jupe soit orientée vers ladite extrémité du corps. La protubérance dé la bague de retenue est ensuite engagée dans la cannelure jusqu'à atteindre ladite gorge ; un mouvement de rotation du type susdit est imprimé à la bague avant que le capot ne soit positionné de telle façon que l'intégralité de sa jupe recouvre la bague. De cette manière, grâce notamment à la protubérance radiale du capot; l'ensemble qu'il constitue avec la bague de retenue est verrouillé en rotation.

Ladite deuxième conformation de l'élément de verrouillage peut, par exemple, consister en au moins un ergot pouvant coopérer avec au moins une encoche comprise sur la bague de retenue.

Des modes d'exécution de l'invention seront décrits ci-après, à titre d'exemples non limitatifs, avec référence aux dessins annexés, dans lesquels :
La figure 1 est une représentation en coupe d'un poussoir d'un système de fermeture selon l'invention, ce poussoir étant engagé dans un logement d'un système de fermeture.
La figure 2 est une représentation schématique du corps et de la bague de retenue d'un système de fermeture selon l'invention, la bague de retenue étant disposée de manière à ce que sa protubérance puisse être engagée dans la cannelure dudit corps.
La figure 3 est une représentation schématique dudit corps, de ladite bague de retenue qui est engagée dans sa gorge, ainsi que d'un capot d'un système de fermeture selon l'invention, qui est disposé de manière à ce que sa protubérance puisse être engagée dans la cannelure dudit corps.
Les figures 4 et 4' sont une représentation schématique en perspective de ladite bague de retenue respectivement de profil et légèrement en biais.
Les figures 5 et 5' sont des représentations schématiques en perspective dudit capot légèrement en biais.

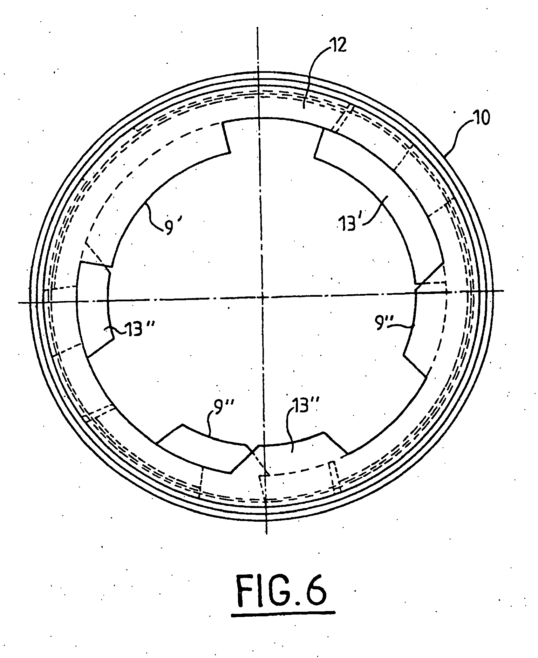

La figure 6 est une vue schématique de face de l'ensemble constitué par la bague de retenue et par le capot.
La figure 7 est une vue d'ensemble d'un système de fermeture selon l'invention tel que représenté sur la figure 3.
Les figures 8 et 8' sont des représentations schématiques en perspective selon une variante d'exécution de l'invention, d'une bague de retenue légèrement en biais.
Les figures 9 et 9' sont des représentations schématiques en perspective selon une variante d'exécution de l'invention, d'un capot légèrement en bisais.
La figure 10 est une vue d'ensemble d'un système de fermeture selon ladite variante d'exécution de l'invention.
La figure 11 est une représentation en coupe d'un système de fermeture selon une autre variante d'exécution de l'invention ; le système de fermeture comprenant une patte élastique qui permet de verrouiller en translation la bague de retenue.

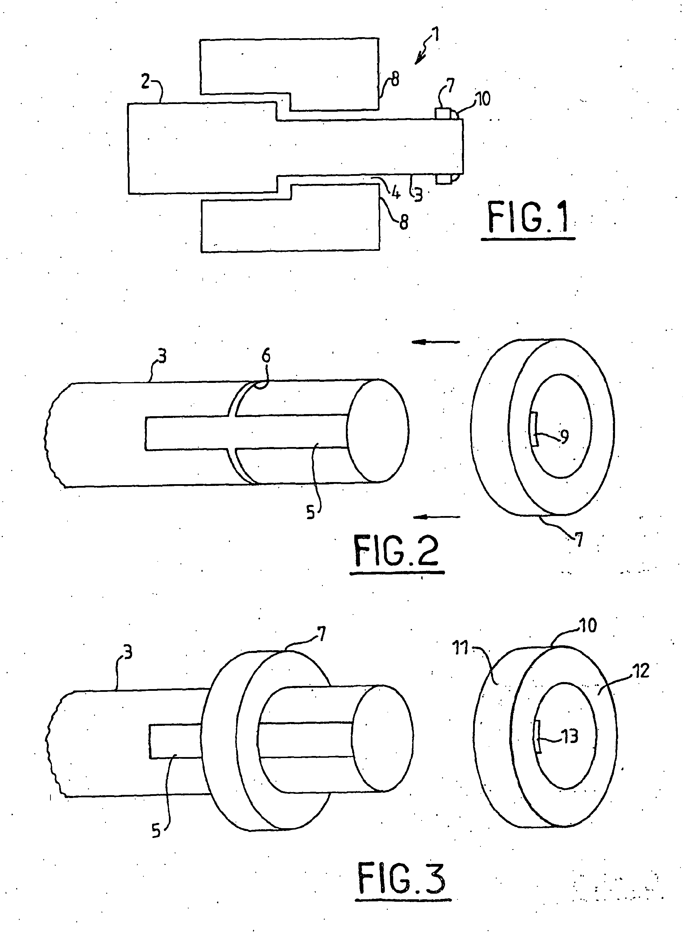

Tel que représenté sur la figure 1, le poussoir 1 du système de fermeture comprend à l'une de ses extrémités une tête 2, sur le sommet de laquelle l'utilisateur peut exercer une pression, ainsi qu'un corps 3 sensiblement cylindrique constituant son autre extrémité.

Le corps du poussoir 3 est monté coulissant dans un logement approprié 4 (ici de forme cylindrique) du système de fermeture et s'étend à l'opposé de la tête 2 dans un espace où il coopère avec un mécanisme de fermeture (non représenté), notamment lorsque le poussoir 1 est enfoncé.

Comme illustré sur la figure 2, le corps 3 est sensiblement cylindrique et sa surface cylindrique extérieure comporte :
o au moins une cannelure axiale 5 débouchant à son extrémité inférieure (celle susceptible de coopérer avec le mécanisme de fermeture lorsque le poussoir 1 est enfoncé). ; et
o une gorge annulaire 6 coaxiale recoupant ladite cannelure 5 à une distance prédéterminée de ladite extrémité.

Afin d'éviter que le poussoir 1 ne sorte de son logement 4, lorsque notamment la pression exercée sur sa tête 2 est relâchée, une bague de retenue rigide 7 servant de butée fin de course est disposée dans sa gorge 6.

Cette bague de retenue 7, qui coopère avec une surface de butée 8 du logement 4, présente un diamètre intérieur au moins égal au diamètre extérieur dudit corps 3. Elle comprend au moins une protubérance radiale 9 qui s'étend en saillie vers l'intérieur, à partir de sa surface intérieure. Cette protubérance radiale 9 est dimensionnée de manière à pouvoir s'engager dans ladite cannelure 5 et dans ladite gorge 6 ainsi, la protubérance radiale 9 comprend une largeur sensiblement égale à la largeur de la cannelure 5 et une épaisseur sensiblement égale à la largeur de la gorge 6.

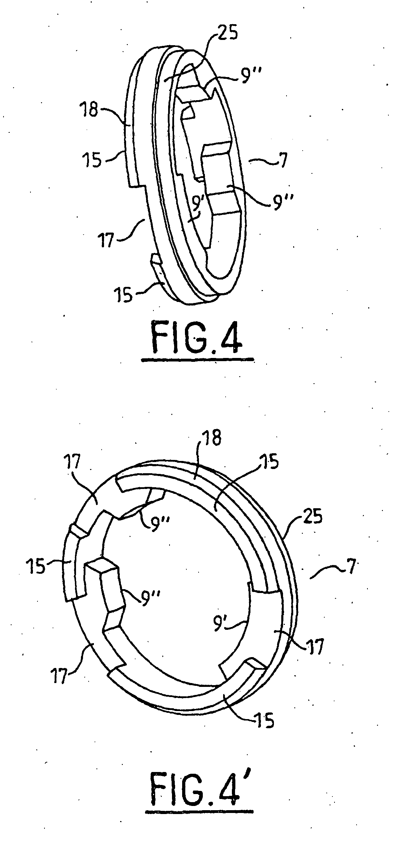

A titre d'exemple, tel que cela est illustré sur les figures 4 et 4', la bague de retenue 7 peut comprendre trois protubérances 9', 9" disposées sur sa surface intérieure à savoir, deux petites protubérances 9" ayant sensiblement les mêmes dimensions et une grande protubérance 9' présentant une largeur plus importante. Ces trois protubérances 9', 9" sont disposées de telle façon qu'une orientation appropriée de la bague de retenue 7 leur permet d'être chacune dans l'axe d'une cannelure 5 correspondante du corps du poussoir 3 (celui-ci comprenant alors trois cannelures 5), chaque cannelure 5 présentant la même largeur que celle de la protubérance 9', 9" qui lui est associée.

Ainsi, tel que cela est représenté sur les figures 2 et 3, la bague de retenue 7 est orientée de telle façon que sa protubérance 9 soit dans l'axe de la cannelure 5 dudit corps 3. La bague de retenue 7 est ensuite engagée sur le corps du poussoir 3 jusqu'à atteindre ladite gorge 6. La bague de retenue 7 est ensuite entraînée en rotation de manière à ce que sa protubérance 9 s'engage dans la gorge annulaire 6 et ne soit plus dans l'axe de la cannelure 5, ce qui permet de bloquer axialement la bague 7.

Afin de maintenir en position la bague de retenue 7, un capot 10, apte à s'engager sur le corps du poussoir 3, et comprenant des conformations spécifiques est disposé de manière à recouvrir et bloquer en rotation la bague de retenue 7.

Ce capot 10 comprend une jupe cylindrique 11 de diamètre intérieur sensiblement égal -au diamètre extérieur de ladite bague 7. Le capot 10 comporte également :
o une collerette radiale 12 qui s'étend depuis l'une des extrémités de la jupe 11 vers l'intérieur, cette collerette radiale 12 présentant un diamètre intérieur sensiblement égal au diamètre extérieur dudit corps 3 ;
o au moins une protubérance radiale 13 qui s'étend depuis la surface intérieure de ladite collerette 12, cette protubérance radiale 13 étant conformée de manière à pouvoir s'engager dans ladite cannelure 5 ; et
o au moins une lèvre circulaire 14 s'étendant radialement depuis la surface intérieure de ladite jupe 11, vers l'intérieur de celle-ci, cette lèvre 14 étant destinée à assurer une fixation temporaire, i.e. démontable, par clipsage du capot 10 sur ladite bague 7.

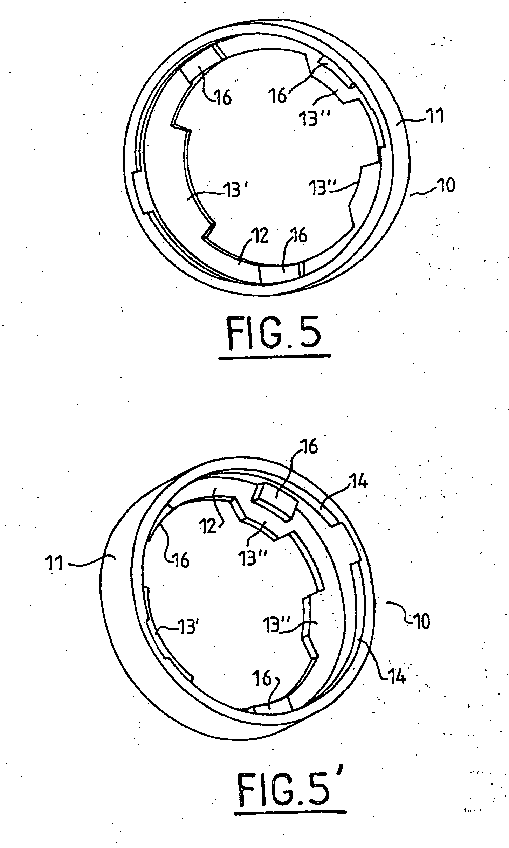

A titre d'exemple, tel que cela est illustré sur les figures 5 et 5', le capot 10 comporte trois protubérances radiales 13', 13" à savoir, deux petites protubérances 13" ayant sensiblement les mêmes dimensions et une grande protubérance 13' présentant une largeur plus importante. Ces trois protubérances 13', 13" sont disposées de telle façon qu'une orientation appropriée du capot 10 leur permet d'être chacune dans l'axe d'une cannelure correspondante 5 du corps du poussoir 3 (celui-ci comprenant alors trois cannelures 5), chaque cannelure 5 présentant la même largeur que celle de la protubérance 13', 13" qui lui est associée. De plus, le capot 10 comporte également deux lèvres circulaires 14 s'étendant à la base de sa jupe 11, cette base constituant l'autre extrémité de la jupe 11.

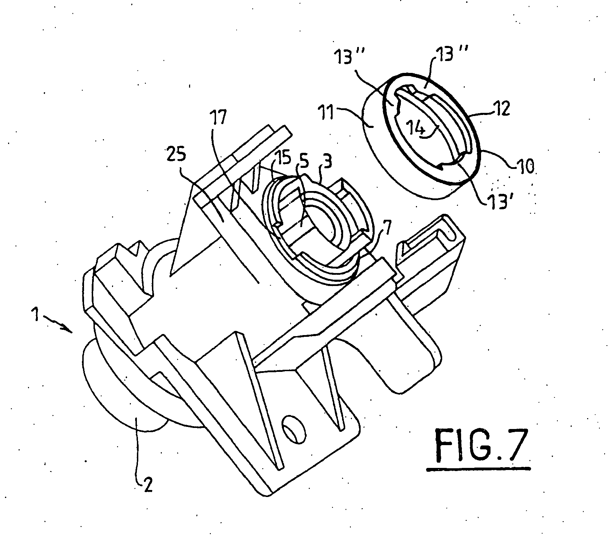

Ainsi, tel que cela est représenté sur les figure 3 et 7, la (les) protubérance(s) radiale(s) 13, 13', 13" dudit capot 10 est (sont) engagée(s) dans la (les) cannelure(s) 5 dudit corps 3, le capot 10 étant positionné de façon à ce que ce l'intégralité de sa jupe 11 recouvre la bague de retenue 7. Le positionnement du capot 10 sur la bague de retenue 7 provoque le clipsage de ladite (desdites) lèvre(s) 14 sur l'extrémité inférieure de la bague 7, ce qui permet de solidariser le capot 10 à la bague 7.

Avantageusement, tel que cela est représenté sur les figures 4 et 4', l'extrémité inférieure de la bague de retenue 7 peut être constituée par un décrochement annulaire 25 où la (les) lèvre(s) 14 du capot 10 peut (peuvent) se clipser.

La (les) protubérance(s) radiale(s) 13, 13', 13" du capot 10 est. (sont) bloquée(s) en rotation par les parois latérales de ladite (lesdites) cannelure(s) 5, ce qui permet de verrouiller en rotation l'ensemble constitué par le capot 10 et par la bague de retenue 7.

De manière avantageuse, la bague de retenue 7 peut comprendre sur sa surface supérieure au moins une proéminence radiale 15, et le capot 10 peut également comprendre au moins un ergot 16 qui s'étend depuis la surface intérieure de ladite jupe 11 et qui est de préférence en contact avec la surface inférieure de la collerette 12. L'ergot 16 est conformé et disposé de manière à buter contre ladite proéminence 15 lorsque le capot 10 est engagé sur le corps du poussoir 3, disposé sur la bague de retenue 7 et qu'un mouvement de rotation relatif du capot 10 par rapport à la bague de retenue 7 est exercé, ceci permettant d'optimiser le blocage en rotation de cet ensemble.

A titre d'exemple, tel que cela est représenté sur les figures 4 et 4', la bague de retenue 7 peut comprendre trois proéminences 15 qui définissent trois encoches radiales 17, dans chacune desquelles peuvent s'engager l'un des trois ergots 16 du capot 10 (tel que représenté sur les figures 5 et 5') lorsque ce dernier recouvre la bague de retenue 7.

Avantageusement, la surface latérale externe 18 de ladite (desdites) proéminence(s) 15 peut être chanfreinée de manière à optimiser la solidarisation du capot 10 et de la bague de retenue 7.

De manière avantageuse, le capot 10 peut présenter une hauteur sensiblement supérieure à celle de la bague de retenue 7 ce qui permet :
● d'optimiser l'étanchéité, notamment au niveau de ladite surface de butée du logement 8;
● d'amortir le choc de la bague 7 contre ladite surface de butée 8, ce qui entraîne notamment une réduction de la bruyance dudit choc.

Avantageusement, le capot 10 permet également d'empêcher que des corps étrangers pénètrent dans des cavités (non représentées) pouvant être présentes sur le corps du poussoir 3.

Selon une variante d'exécution de l'invention, le capot 10 est engagé sur le corps du poussoir 3 avant la bague de retenue 7.

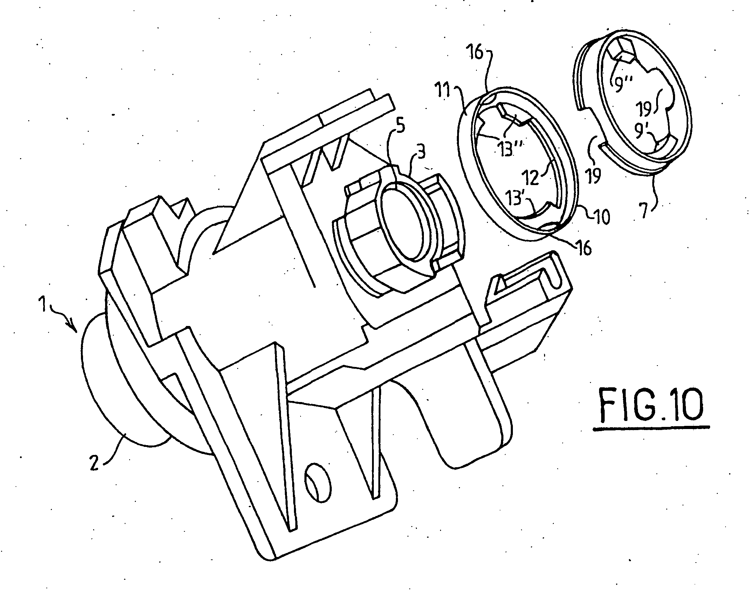

Ainsi, comme illustré sur la figure 10, les protubérances radiales 13', 13" du capot 10 sont d'abord engagées dans les cannelures 5 du corps 3 en faisant en sorte que ladite jupe 11 soit orientée vers ladite extrémité inférieure du corps 3. Les protubérances 9', 9" de la bague de retenue 7 sont engagées dans les cannelures 5 jusqu'à atteindre ladite gorge 6 puis, la bague de retenue 7 est entraînée en rotation de manière à ce que ses protubérances 9', 9" s'engagent dans la gorge annulaire 6 et ne soient plus dans l'axe des cannelures 5, ce qui permet de bloquer axialement la bague 7. Enfin, le capot 10 est positionné de façon à ce que sa jupe 11 recouvre la bague de retenue 7.

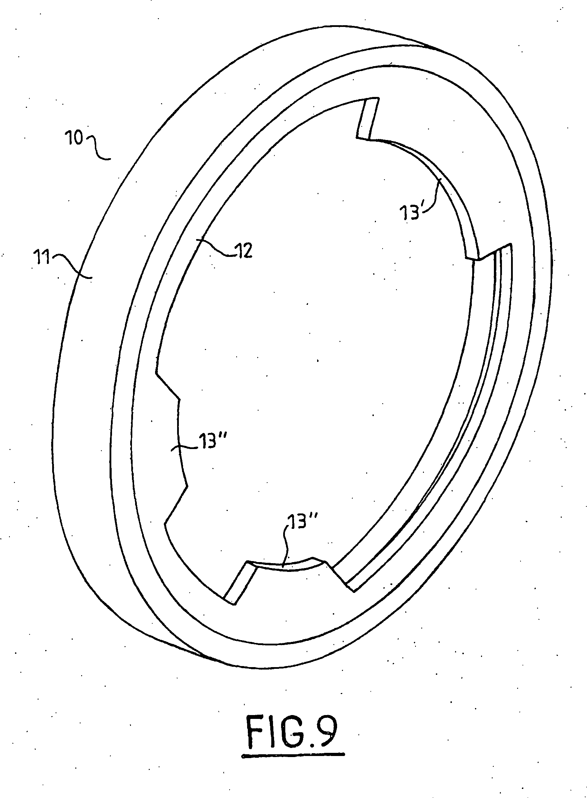

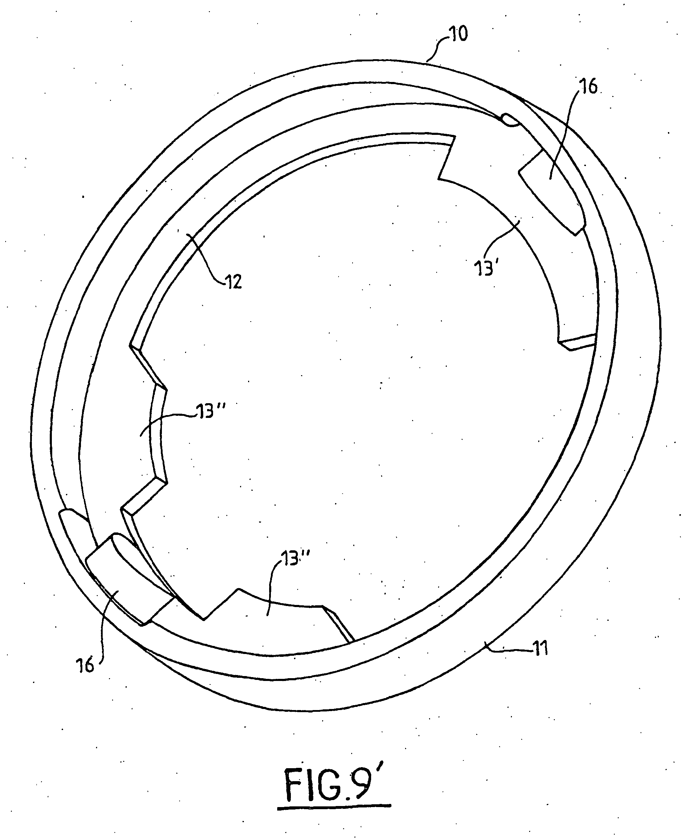

A titre d'exemple, tel que représenté sur les figures 9 et 9', le capot 10 du type susdit peut comprendre trois protubérances radiales 13', 13" à savoir, deux petites protubérances 13" ayant sensiblement les mêmes dimensions et une grande protubérance 13' présentant une largeur plus importante. Ces trois protubérances 13', 13" sont disposées de telle façon qu'une orientation appropriée du capot 10 leur permet d'être chacune dans l'axe d'une cannelure correspondante 5 du corps du poussoir 3 (celui-ci comprenant alors trois cannelures 5), chaque cannelure 5 présentant la même largeur que celle de la protubérance 13', 13" qui lui est associée. Le capot 10 peut également comporter deux ergots 16 du type susdit.

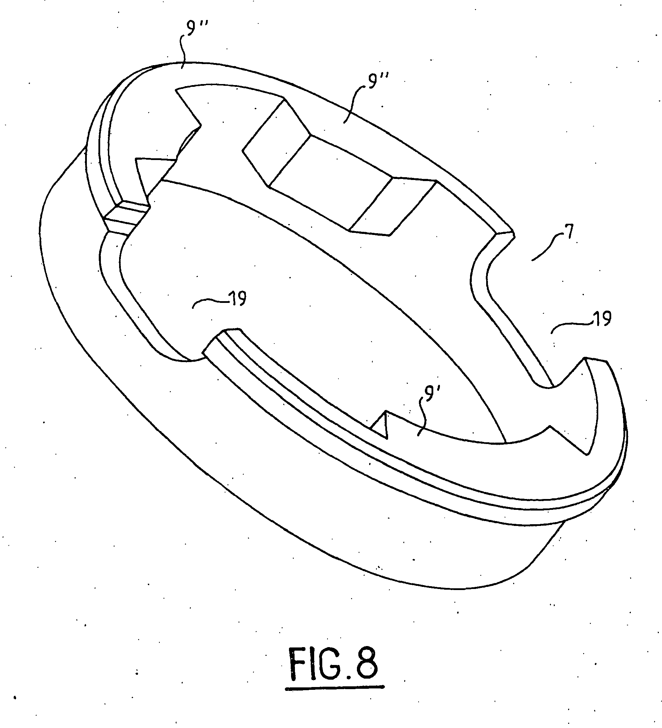

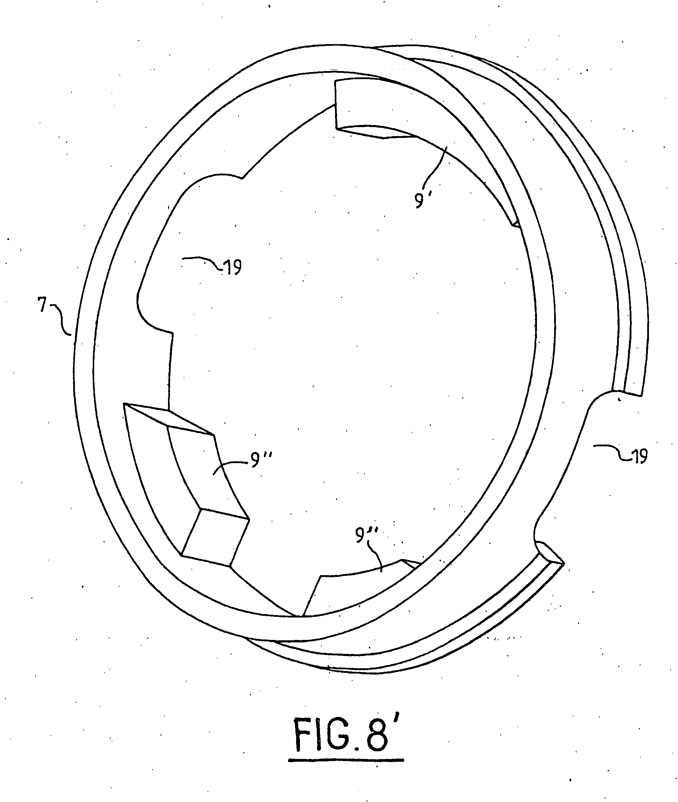

La bague de retenue 7, tel que cela est illustré sur les figures 8 et 8', comporte alors :
● deux encoches radiales 19 disposées sur sa surface: latérale et dans chacune desquelles peuvent s'engager l'un des deux ergots 16 du capot 10 lorsque ce dernier est engagé sur le corps du poussoir 3 et recouvre la bague de retenue 7, ce qui permet d'optimiser le blocage en rotation de cet ensemble ; et
● trois protubérances radiales 9', 9" à savoir, deux petites protubérances 9" ayant sensiblement les mêmes dimensions et une grande protubérance 9' présentant une largeur plus importante; ces trois protubérances 9', 9" sont disposées de telle façon qu'une orientation appropriée de la bague de retenue 7 leur permet d'être chacune dans l'axe d'une cannelure correspondante 5 du corps du poussoir 3 (celui-ci comprenant alors trois cannelures 5), chaque cannelure 5 présentant la même largeur que celle de la protubérance 9', 9" qui lui est associée.

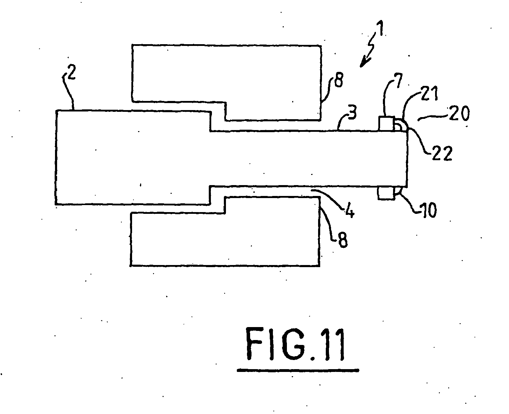

Selon une autre variante d'exécution de l'invention, tel que cela est représenté sur la figure 11, la bague de retenue 7 peut comprendre au moins une patte élastique 20 comportant :
● une âme 21 ayant une hauteur au moins égale à ladite distance séparant la gorge 6 de l'extrémité inférieure du corps du poussoir 3 ; cette âme 21 s'étend depuis la surface supérieure de la bague de retenue 7 vers cette extrémité du corps du poussoir 3, dans un axe sensiblement perpendiculaire à celui de la bague de retenue 7 et de telle manière que la distance la séparant de la surface cylindrique extérieure dudit corps 3 soit négligeable ;
● au moins une languette 22 dont l'axe est sensiblement parallèle à celui de la bague dé retenue 7 et qui est fixée à l'autre extrémité de ladite âme 21 ; elle s'étend parallèlement à la face inférieure du corps du poussoir 3 de telle manière que la distance la séparant de cette face inférieure soit négligeable.

De cette façon, la bague de retenue 7 est verrouillée en translation verticale et horizontale par rapport au corps du poussoir 1, la patte élastique 20 constituant un moyen de retenue.

La patte élastique 20 peut être réalisée par surmoulage et être constituée de matière plastique.

La bague de retenue 7 est rigide et peut être constituée d'un alliage métallique tel que le zamak (nom déposé). Le capot 10 est de préférence constitué d'une matière souple telle que du caoutchouc ou une matière plastique.

## Revendications

1. Système de fermeture d'un véhicule automobile comprenant :
- un poussoir (1) muni d'une tête (2) et d'un corps (3), le corps (3) étant monté coulissant dans un logement (4) du système de fermeture,
- une bague de retenue (7) solidarisée audit poussoir (1),
**caractérisé en ce qu'**il comprend un élément de verrouillage (10) au moins partiellement annulaire, apte à s'engager sur le corps du poussoir (3), cet élément de verrouillage comportant :
- une première conformation (13) agissant par coopération de forme avec une conformation correspondante (5) dudit corps (3) pour verrouiller en rotation l'élément de verrouillage sur ledit corps (3) ;
- une deuxième conformation (14, 16) agissant par coopération de forme avec une conformation correspondante (25, 17, 19) de ladite bague de retenue (7) pour la verrouiller en rotation par rapport audit corps (3),
et **en ce que**
- le corps du poussoir (3) comprend à l'une de ses extrémités une portion sensiblement cylindrique et dont la surface cylindrique extérieure est munie :
o d'au moins une cannelure axiale (5) débouchant à l'une des extrémités du corps (3) ;
o d'une gorge annulaire coaxiale (6) recoupant ladite cannelure (5) à une distance prédéterminée de ladite extrémité ;
- la bague de retenue (7) présente un diamètre intérieur au moins égal au diamètre extérieur dudit corps (3), cette bague de retenue (7) comprenant au moins une protubérance (9, 9', 9") qui s'étend radialement en saillie vers l'intérieur, à partir de sa surface intérieure, cette protubérance (9, 9', 9") étant dimensionnée de manière à pouvoir s'engager dans ladite cannelure (5) et dans ladite gorge (6) ;
- l'élément de verrouillage consiste en un capot (10) comprenant une jupe cylindrique (11) de diamètre intérieur sensiblement égal au diamètre extérieur de ladite bague (7), ce capot (10) comportant :
o une collerette radiale (12) qui s'étend vers l'intérieur, depuis l'une des extrémités de la jupe (11), cette collerette radiale (12) présentant un diamètre intérieur sensiblement égal au diamètre extérieur dudit corps (3) ;
o au moins une protubérance radiale (13, 13', 13") qui s'étend depuis la surface intérieure de ladite collerette (12), cette protubérance radiale (13, 13', 13") étant conformée de manière à pouvoir s'engager dans ladite cannelure (5).

2. Système de fermeture selon la revendication 1,
**caractérisé en ce que** le capot (10) comporte au moins une lèvre circulaire (14) s'étendant radialement depuis la surface intérieure de ladite jupe (11), vers l'intérieur de cette jupe (11), cette lèvre (14) pouvant se clipser sur la bague de retenue (7) lors du positionnement du capot (10) sur cette bague (7).

3. Système de fermeture selon la revendication 2,
**caractérisé en ce que** l'extrémité inférieure de la bague de retenue (7) est constituée par un décrochement annulaire (25) où la lèvre (14) du capot (10) peut se clipser.

4. Système de fermeture selon l'une des revendications 1 à 3,
**caractérisé en ce que** le capot (10) comporte au moins un ergot (16) apte à coopérer avec au moins une encoche (17, 19) comprise sur la bague de retenue (7).

5. Système de fermeture selon la revendication 4,
**caractérisé en ce que** la bague de retenue (7) comprend sur sa surface supérieure au moins une proéminence radiale (15) ; ledit ergot (16), qui s'étend depuis la surface intérieure de ladite jupe (11) et qui est en contact avec la surface inférieure de la collerette (12), est conformé et disposé de manière à buter contre ladite proéminence (15) lorsque le capot (10) est disposé sur la bague de retenue (7) et qu'un mouvement de rotation relatif du capot (10) par rapport à la bague de retenue (7) est exercé.

6. Système de fermeture selon la revendication 5,
**caractérisé en ce que** la surface latérale externe (18) de ladite proéminence (15) est chanfreinée.

7. Système de fermeture selon l'une des revendications 1 à 6,
**caractérisé en ce que** la bague de retenue (7) est orientée de telle façon que sa protubérance (9, 9', 9") soit dans l'axe de la cannelure (5) du corps (3), la bague de retenue (7) est ensuite engagée sur le corps du poussoir (3) jusqu'à atteindre ladite gorge (6) puis, la bague de retenue (7) est entraînée en rotation de manière à ce que sa protubérance (9, 9', 9") s'engage dans la gorge annulaire (6) et ne soit plus dans l'axe de la cannelure (5), ce qui permet de bloquer axialement la bague (7) ; le capot (10) est ensuite assemblé sur le corps (3), la protubérance radiale (13, 13', 13") dudit capot (10) est engagée dans la cannelure (5) dudit corps (3) puis, le capot (10) est positionné de façon à ce que ce l'intégralité de sa jupe (11) recouvre la bague de retenue (7) enfin, la protubérance radiale (13, 13', 13") du capot (10) est bloquée en rotation par les parois latérales de ladite cannelure (5), ce qui permet de verrouiller en rotation l'ensemble constitué par le capot (10) et par la bague de retenue (7).

8. Système de fermeture selon l'une des revendications 1 à 6,
**caractérisé en ce que** le capot (10) est engagé sur le corps du poussoir avant la bague de retenue (7), la protubérance radiale (13, 13', 13") du capot (10) étant d'abord engagée dans la cannelure (5) du corps (3) en faisant en sorte que la jupe (11) soit orientée vers ladite extrémité inférieure du corps (3), la protubérance (9, 9', 9") de la bague de retenue (7) est ensuite engagée dans la cannelure (5) jusqu'à atteindre ladite gorge (6) puis, la bague de retenue (7) est entraînée en rotation de manière à ce que sa protubérance (9, 9', 9") s'engage dans la gorge annulaire (6) et ne soit plus dans l'axe de la cannelure (5), ce qui permet de bloquer axialement la bague (7) enfin, le capot (10) est positionné de façon à ce que sa jupe (11) recouvre la bague de retenue (7).

9. Système de fermeture selon l'une des revendications 1 à 8,
**caractérisé en ce que** le capot (10) présente une hauteur sensiblement supérieure à celle de la bague de retenue (7).

10. Système de fermeture selon l'une des revendications 1 à 9,
**caractérisé en ce que** la bague de retenue (7) comprend au moins une patte élastique (20) comportant :
- une âme (21) ayant une hauteur au moins égale à ladite distance séparant la gorge (6) de l'extrémité inférieure du corps du poussoir (3) ; cette âme (21) s'étend depuis la surface supérieure de la bague de retenue (7) vers cette extrémité du corps du poussoir (3), dans un axe sensiblement perpendiculaire à celui de la bague de retenue (7) et de telle manière que la distance la séparant de la surface cylindrique extérieure dudit corps (3) soit négligeable ;
- au moins une languette (22) dont l'axe est sensiblement parallèle à celui de la bague de retenue (7) et qui est fixée à l'autre extrémité de ladite âme (21) ; elle s'étend parallèlement à la face inférieure du corps du poussoir (3) de telle manière que la distance la séparant de cette face inférieure soit négligeable.

11. Système de fermeture selon l'une des revendications 1 à 10,
**caractérisé en ce que** la bague de retenue (7) est rigide et le capot (10) étant constitué de caoutchouc ou d'une matière plastique.

12. Système de fermeture selon l'une des revendications précédentes, **caractérisé en ce que** le poussoir (1) du système de fermeture comprend à l'une de ses extrémités une tête (2), sur le sommet de laquelle l'utilisateur peut exercer une pression, ainsi qu'un corps (3) sensiblement cylindrique constituant son autre extrémité, ce corps (3) étant monté coulissant dans un logement approprié (4) du système de fermeture et s'étend à l'opposé de la tête (2) dans un espace où il coopère avec un mécanisme de fermeture, notamment lorsque le poussoir (1) est enfoncé ; de cette manière, lorsque la pression exercée sur la tête (2) du poussoir (1) est relâchée, l'ensemble constitué par la bague de retenue (7) et le capot (10) bute contre la surface de butée (8) du logement (4) ce qui permet d'éviter que le poussoir (1) ne sorte de son logement (4).

## Patentansprüche

1. Schließsystem eines Kraftfahrzeugs, das enthält:
- einen mit einem Kopf (2) und einem Körper (3) versehenen Druckknopf (1), wobei der Körper (3) in einer Aufnahme (4) des Schließsystems gleitend montiert ist,
- einen fest mit dem Druckknopf (1) verbundenen Haltering (7),
**dadurch gekennzeichnet, dass** es ein zumindest teilweise ringförmiges Verriegelungselement (10) enthält, das sich auf den Körper des Druckknopfs (3) aufschieben kann, wobei dieses Verriegelungselement aufweist:
- eine erste Ausgestaltung (13), die durch Formzusammenwirkung mit einer entsprechenden Ausgestaltung (5) des Körpers (3) wirkt, um das Verriegelungselement in Drehung auf dem Körper (3) zu verriegeln;
- eine zweite Ausgestaltung (14, 16), die durch Formzusammenwirkung mit einer entsprechenden Ausgestaltung (25, 17, 19) des Halterings (7) wirkt, um ihn bezüglich des Körpers (3) in Drehung zu verriegeln,
und dass
- der Körper des Druckknopfs (3) an einem seiner Enden einen im Wesentlichen zylindrischen Teil enthält, dessen äußere zylindrische Fläche versehen ist mit:
O mindestens einer axialen Rille (5), die an einem der Enden des Körpers (3) mündet;
O einer koaxialen Ringnut (6), die die Rille (5) in einem Vorbestimmten Abstand zum Ende schneidet;
- der Haltering (7) einen Innendurchmesser mindestens gleich dem Außendurchmesser des Körpers (3) aufweist, wobei dieser Haltering (7) mindestens eine Vorwölbung (9, 9', 9") enthält, die sich von seiner Innenfläche radial nach innen vorstehend erstreckt, wobei diese Vorwölbung (9, 9', 9") so bemessen ist, dass sie sich in die Rille (5) und die Nut (6) einfügen kann;
- das Verriegelungselement aus einer Haube (10) besteht, die eine zylindrische Schürze (11) mit einem Innendurchmesser im Wesentlichen gleich dem Außendurchmesser des Rings (7) enthält, wobei diese Haube (10) aufweist:
O einen radialen Kragen (12), der sich ausgehend von einem der Enden der Schürze (11) nach innen erstreckt, wobei dieser radiale Kragen (12) einen Innendurchmesser im Wesentlichen gleich dem Außendurchmesser des Körpers (3) aufweist;
O mindestens eine radiale Vorwölbung (13, 13', 13"), die sich ausgehend von der Innenfläche des Kragens (12) erstreckt, wobei diese radiale Vorwölbung (13, 13', 13") so gestaltet ist, dass sie sich in die Rille (5) einfügen kann.

2. Schließsystem nach Anspruch 1, **dadurch gekennzeichnet, dass** die Haube (10) mindestens eine kreisförmige Lippe (14) aufweist, die sich radial ausgehend von der Innenfläche der Schürze (11) zum Inneren dieser Schürze (11) erstreckt, wobei diese Lippe (14) bei der Positionierung der Haube (10) auf dem Haltering (7) auf diesem Ring (7) einschnappen kann.

3. Schließsystem nach Anspruch 2, **dadurch gekennzeichnet, dass** das untere Ende des Halterings (7) aus einem ringförmigen Absatz (25) besteht, auf dem die Lippe (14) der Haube (10) einschnappen kann.

4. Schließsystem nach einem der Ansprüche 1 bis 3, **dadurch gekennzeichnet, dass** die Haube (10) mindestens einen Nocken (16) aufweist, der mit mindestens einer auf dem Haltering (7) enthaltenen Kerbe (17, 19) zusammenwirken kann.

5. Schließsystem nach Anspruch 4, **dadurch gekennzeichnet, dass** der Haltering (7) auf seiner Oberfläche mindestens einen radialen Vorsprung (15) enthält; wobei der Nocken (16), der sich ausgehend von der Innenfläche der Schürze (11) erstreckt und mit der unteren Fläche des Kragens (12) in Kontakt ist, so gestaltet und angeordnet ist, dass er gegen den Vorsprung (15) in Anschlag kommt, wenn die Haube (10) auf dem Haltering (7) angeordnet ist, und wenn eine relative Drehbewegung der Haube (10) bezüglich des Halterings (7) ausgeübt wird.

6. Schließsystem nach Anspruch 5, **dadurch gekennzeichnet, dass** die äußere Seitenfläche (18) des Vorsprungs (15) abgeschrägt ist.

7. Schließsystem nach einem der Ansprüche 1 bis 6, **dadurch gekennzeichnet, dass** der Haltering (7) so ausgerichtet wird, dass seine Vorwölbung (9, 9', 9") sich in der Achse der Rille (5) des Körpers (3) befindet, der Haltering (7) anschließend auf den Körper des Druckknopfs (3) aufgeschoben wird, bis er die Nut (6) erreicht, dann der Haltering (7) so in Drehung versetzt wird, dass seine Vorwölbung (9, 9', 9") sich in die Ringnut (6) einfügt und nicht mehr in der Achse der Rille (5) befindet, was es ermöglicht, den Ring (7) axial zu blockieren; die Haube (10) anschließend auf den Körper (3) eingebaut wird, die radiale Vorwölbung (13, 13', 13") der Haube (10) in die Rille (5) des Körpers (3) eingeführt wird, dann die Haube (10) so positioniert wird, dass die Gesamtheit ihrer Schürze (11) den Haltering (7) bedeckt, schließlich die radiale Vorwölbung (13, 13', 13") der Haube (10) durch die Seitenwände der Rille (5) in Drehung blockiert wird, was es ermöglicht, die von der Haube (10) und dem Haltering (7) gebildete Einheit in Drehung zu verriegeln.

8. Schließsystem nach einem der Ansprüche 1 bis 6, **dadurch gekennzeichnet, dass** die Haube (10) auf den Körper des Druckknopfs vor dem Haltering (7) aufgeschoben wird, wobei die radiale Vorwölbung (13, 13', 13") der Haube (10) zuerst in die Rille (5) des Körpers (3) eingeführt wird, indem dafür gesorgt wird, dass die Schürze (11) zum unteren Ende des Körpers (3) gerichtet ist, die Vorwölbung (9, 9', 9") des Halterings (7) anschließend in die Rille (5) eingeführt wird, bis sie die Nut (6) erreicht, dann der Haltering (7) so in Drehung versetzt wird, dass seine Vorwölbung (9, 9', 9") sich in die Ringnut (6) einfügt und sich nicht mehr in der Achse der Rille (5) befindet, was es ermöglicht, den Ring (7) axial zu blockieren, schließlich die Haube (10) so positioniert wird, dass ihre Schürze (11) den Haltering (7) bedeckt.

9. Schließsystem nach einem der Ansprüche 1 bis 8, **dadurch gekennzeichnet, dass** die Haube (10) eine Höhe im Wesentlichen höher als diejenige des Halterings (7) aufweist.

10. Schließsystem nach einem der Ansprüche 1 bis 9, **dadurch gekennzeichnet, dass** der Haltering (7) mindestens eine elastische Lasche (20) enthält, die aufweist:
- einen Steg (21) mit einer Höhe mindestens gleich dem die Nut (6) vom unteren Ende des Körpers des Druckknopfs (3) trennenden Abstand; dieser Steg (21) erstreckt sich von der Oberfläche des Halterings (7) zu diesem Ende des Körpers des Druckknopfs (3), in einer Achse im Wesentlichen lotrecht zu derjenigen des Halterings (7) und derart, dass der ihn von der äußeren zylindrischen Fläche des Körpers (3) trennende Abstand vernachlässigbar ist;
- mindestens eine Zunge (22), deren Achse im Wesentlichen parallel zu derjenigen des Halterings (7) ist und die am anderen Ende des Stegs (21) befestigt ist; sie erstreckt sich parallel zur Unterseite des Körpers des Druckknopfs (3) derart, dass der sie von dieser Unterseite trennende Abstand vernachlässigbar ist.

11. Schließsystem nach einem der Ansprüche 1 bis 10, **dadurch gekennzeichnet, dass** der Haltering (7) steif ist und die Haube (10) aus Kautschuk oder einem Kunststoff besteht.

12. Schließsystem nach einem der vorhergehenden Ansprüche, **dadurch gekennzeichnet, dass** der Druckknopf (1) des Schließsystems an einem seiner Enden einen Kopf (2), auf dessen Scheitel der Benutzer einen Druck ausüben kann, sowie einen im Wesentlichen zylindrischen Körper (3) enthält, der sein anderes Ende bildet, wobei dieser Körper (3) in einer geeigneten Aufnahme (4) des Schließsystems gleitend montiert ist und sich entgegengesetzt zum Kopf (2) in einen Raum erstreckt, in dem er mit einem Schließmechanismus zusammenwirkt, insbesondere, wenn der Druckknopf (1) eingedrückt wird; auf diese Weise kommt die aus dem Haltering (7) und der Haube (10) bestehende Einheit, wenn der auf den Kopf (2) des Druckknopfs (1) ausgeübte Druck gelöst wird, gegen die Anschlagfläche (8) der Aufnahme (4) in Anschlag, wodurch vermieden werden kann, dass der Druckknopf (1) aus seiner Aufnahme (4) austritt.

## Claims

1. Closure system for a motor vehicle comprising:
- a pushrod (1) provided with a head (2) and a body (3), the body (3) being mounted slidingly in a recess (4) of the closure system,
- a retaining ring (7) secured to said pushrod (1), **characterized in that** it comprises an at least partially annular locking element, able to fit onto the body of the pushrod (3), said locking element comprising:
- a first shaping (13) acting by collaboration of shapes with a corresponding shaping (5) of said body (3) to rotationally lock the locking element onto said body (3);
- a second shaping (14,16) acting by collaboration of shapes with a corresponding shaping (25, 17, 19) of said retaining ring (7) to lock it rotationally with regard to said body (3), and **in that**:
- the pushrod body (3) comprises, at one of its ends, a substantially cylindrical portion, whereof the outer cylindrical surface is provided with:
o at least one axial spline (5) terminating at one of the ends of the body (3);
oa coaxial annular groove (6) intersecting said spline (5) at a predefined distance from said end;
- the retaining ring (7) has an inside diameter at least equal to the outside diameter of said body (3), said retaining ring (7) comprising at least one protuberance (9, 9', 9") extending radially and projecting inwardly from its inner surface, said protuberance (9, 9', 9") being dimensioned so as to be able to fit into said spline (5) and into said groove (6);
- the locking element consists of a cap (10) comprising a cylindrical skirt (11) having an inside diameter substantially equal to the outside diameter of said ring (7), said cap (10) comprising:
o radial collar (12) extending inwardly, from one of the ends of the skirt (11), said radial collar (12) having an inside diameter substantially equal to the outside diameter of said body (3);
oat least one radial protuberance (13, 13', 13") extending from the inner surface of said collar (12), said radial protuberance (13, 13', 13") being shaped so as to fit into said spline (5).

2. Closure system according to Claim 1, **characterized in that** the cap (10) comprises at least one circular lip (14) extending radially from the inner surface of said skirt (11), toward the interior of said skirt (11), said lip (14) being clippable to the retaining ring (7) during the positioning of the cap (10) on said ring (7).

3. Closure system according to Claim 2, **characterized in that** the lower end of the retaining ring (7) consists of an annular crank (25) whereto the lip (14) of the cap (10) can be clipped.

4. Closure system according to one of Claims 1 to 3, **characterized in that** the cap (10) comprises at least one toe (16) able to cooperate with at least one slot (17, 19) on the retaining ring (7).

5. Closure system according to Claim 4, **characterized in that** the retaining ring (7) comprises, on its upper surface, at least one radial projection (15); said toe (16), which extends from the inner surface of said skirt (11) and which is in contact with the inner surface of the collar (12), is shaped and disposed so as to thrust against said projection (15) when the cap (10) is disposed on the retaining ring (7), and when a relative rotational movement of the cap (10) is applied with regard to the retaining ring (7).

6. Closure system according to Claim 5, **characterized in that** the outer lateral surface (18) of said projection (15) is beveled.

7. Closure system according to one of Claims 1 to 6, **characterized in that** the retaining ring (7) is oriented so that its protuberance (9, 9', 9") is in the axis of the spline (5) of the body (3), the retaining ring (7) is then fitted around the pushrod body (3) until it reaches said groove (6), then the retaining ring (7) is rotated so that its protuberance (9, 9', 9") fits into the annular groove (6) and is no longer in the axis of the spline (5), thereby axially blocking the ring (7); the cap (10) is then secured to the body (3), the radial protuberance (13, 13', 13") of said cap (10) is fitted into the spline (5) of said body (3), then the cap (10) is positioned so that the whole of its skirt (11) covers the retaining ring (7), and finally, the radial protuberance (13, 13', 13") of the cap (10) is rotationally blocked by the side walls of said spline (5), thereby rotationally locking the assembly consisting of the cap (10) and the retaining ring (7).

8. Closure system according to one of Claims 1 to 6, **characterized in that** the cap (10) is fitted onto the body of the pushrod before the retaining ring (7), the radial protuberance (13, 13', 13") of the cap (10) being first fitted into the spline (5) of the body (3) so that the skirt (11) is oriented toward said lower end of the body (3), the protuberance (9, 9', 9") of the retaining ring (7) is then fitted into the spline (5) until it reaches said groove (6), then the retaining ring (7) is rotated so that its protuberance (9, 9', 9") fits into the annular groove (6) and is no longer in the axis of the spline (5), thereby axially blocking the ring (7), and finally, the cap (10) is positioned so that its skirt (11) covers the retaining ring (7).

9. Closure system according to one of Claims 1 to 8, **characterized in that** the cap (10) has a height substantially greater than that of the retaining ring (7).

10. Closure system according to one of Claims 1 to 9, **characterized in that** the retaining ring (7) comprises at least one elastic bracket (20) comprising:
a core (21) having a height at least equal to said distance between the groove (6) and the lower end of the pushrod body (3); said core (21) extends from the upper surface of the retaining ring (7) toward said end of the pushrod body (3), in an axis substantially perpendicular to that of the retaining ring (7) and in such a way that the distance between it and the outer cylindrical surface of said body (3) is negligible;
. at least one tab (22) whereof the axis is substantially parallel to that of the retaining ring (7) and which is fixed to the other end of said core (21); it extends parallel to the lower face of the pushrod body (3) in such a way that the distance between it and said lower face is negligible.

11. Closure system according to one of Claims 1 to 10, **characterized in that** the retaining ring (7) is rigid and the cap (10) is made from rubber or plastic.

12. Closure system according to one of the preceding claims, **characterized in that** the pushrod (1) of the closure system comprises, at one of its ends, a head (2), on the top of which the user can apply a pressure, and a substantially cylindrical body (3) constituting its other end, said body (3) being mounted slidingly in an appropriate recess (4) of the closure system and extending opposite the head (2) into the space where it cooperates with a closure mechanism, in particular when the pushrod (1) is pushed in; in this way, when the pressure applied to the head (2) of the pushrod (1) is released, the assembly consisting of the retaining ring (7) and the cap (10) thrusts against the stop surface (8) of the recess (4) thereby preventing the pushrod (1) from leaving its recess (4).
